(19) Europäisches Patentamt
European Patent Office
Office européen des brevets

(11) Veröffentlichungsnummer: **0 195 912**
**A2**

# (12) EUROPÄISCHE PATENTANMELDUNG

(21) Anmeldenummer: **86101754.9**

(22) Anmeldetag: **12.02.86**

(51) Int. Cl.⁴: **C 08 G 69/32**, C 08 G 69/28

(30) Priorität: **21.02.85 DE 3505904**

(43) Veröffentlichungstag der Anmeldung: **01.10.86 Patentblatt 86/40**

(84) Benannte Vertragsstaaten: **DE FR GB IT**

(71) Anmelder: **BAYER AG, Konzernverwaltung RP Patentabteilung, D-5090 Leverkusen 1 Bayerwerk (DE)**

(72) Erfinder: **Spies, Manfred, Friedrich-Ebert-Strasse 111, D-3550 Marburg (DE)**
Erfinder: **Strohriegl, Peter, Dr., Bayreutherstrasse 15a, D-8581 Hummeltal (DE)**
Erfinder: **Heitz, Walter, Prof.Dr., Am Schmidtborn 5, D-3575 Kirchhain (DE)**

## (54) Verfahren zur Herstellung von aromatischen Polyamiden.

(57) Die Erfindung betrifft ein Verfahren zur Herstellung von aromatischen Polyamiden aus aromatischen Dicarbonsäuren und Diaminen in Gegenwart von Metallhalogeniden.

EP 0 195 912 A2

ACTORUM AG

0195912

BAYER AKTIENGESELLSCHAFT 5090 Leverkusen, Bayerwerk
Konzernverwaltung RP
Patentabteilung Eck/by-c

# Verfahren zur Herstellung von aromatischen Polyamiden

Die Erfindung betrifft ein Verfahren zur Herstellung von aromatischen Polyamiden aus aromatischen Dicarbonsäuren und Diaminen in Gegenwart von Metallhalogeniden.

Es ist bekannt, aus aromatischen Dicarbonsäurechloriden und Diaminen aromatische Polyamide herzustellen (z.B. H.G. Elias in Ullmanns Encyclopädie der technischen Chemie, 4.Auflage, Band 11, S. 344).

Es wurde nun gefunden, daß aromatische Polyamide durch Umsetzung von aromatischen Carbonsäuren mit Diamiden hergestellt werden können, wenn Metallhalogenide von Elementen der 3. und 4. Hauptgruppe sowie der 4. Nebengruppe des Periodensystems zugegen sind.

Gegenüber den bekannten Verfahren hat das erfindungsgemäße Verfahren u.a. den Vorteil, daß Carbonsäuren anstelle von Carbonsäurechloriden eingesetzt werden können. Weiterhin können die erfindungsgemäß hergestellten Polyamide direkt weiterverarbeitet werden, ohne daß die bei der Umsetzung entstandenen Metalloxide entfernt werden.

Gegenstand der Erfindung ist daher ein Verfahren zur Herstellung aromatischer Polyamide mit wiederkehrenden Struktureinheiten der Formeln Ia und Ib

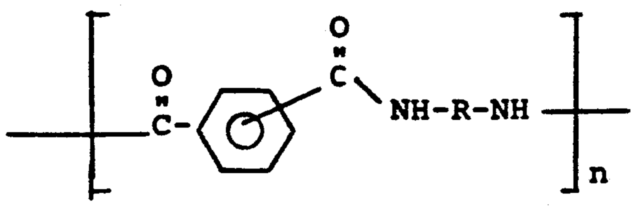

(Ia) ,

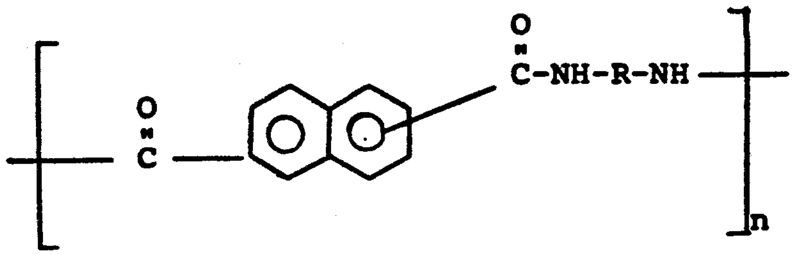

(Ib) ,

in welchen

R für

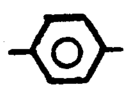 (p-Phenylen), 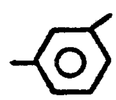 (m-Phenylen),

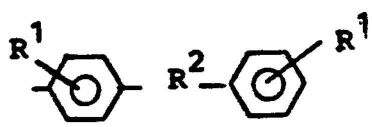 oder 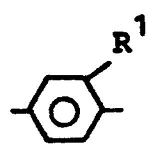 steht,

worin

$R^1$ für H, $C_1$-$C_8$-Alkyl, vorzugsweise Methyl steht.

$R^2$ für eine einfache Bindung, $-CH_2-$, $-O-$, $SO_2-$ und $-S-$ steht und

n für eine ganze Zahl von 2 bis 200, vorzugsweise 5 bis 100 steht,

durch Umsetzung von aromatischen Dicarbonsäuren mit Diaminen, dadurch gekennzeichnet, daß die Umsetzung in Gegenwart von Halogeniden von Elementen der 3. und 4. Hauptgruppe sowie der 4. Nebengruppe des Periodensystems durchgeführt wird.

Als aromatische Dicarbonsäuren können

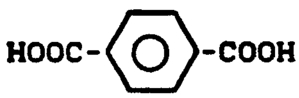 (Terephthalsäure), (IIa) ,

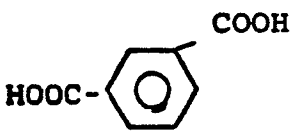 (Isophthalsäure), (IIb) ,

Naphthalindicarbonsäuren wie

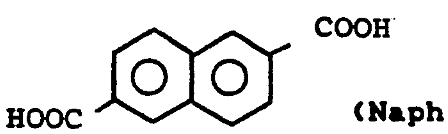 (Naphthalin-2,6-dicarbonsäure) (IIc)

und 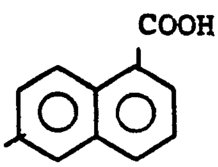

(Naphthalin-1,6-dicarbonsäure) (IId) ,

eingesetzt werden.

Als Amine können Diamine der Formel (III)

$$H_2N\text{-}R\text{-}NH_2 \qquad (III).$$

in welcher

R die bei Formel (Ia und Ib) angegebene Bedeutung hat.

eingesetzt werden.

Pro Mol aromatischer Dicarbonsäure können etwa 1 Mol Diamin eingesetzt werden.

Als Halogenide von Elementen der 3. und 4. Hauptgruppe sowie 4. Nebengruppe des Periodensystems der Elemente (Hofmann Rüdorff, Anorganische Chemie S.97. 19. Auflage. Vieweg Verlag Braunschweig, 1966) werden vorzugsweise die Chloride verwendet. Bevorzugt werden $BCl_3$. $AlCl_3$. $GeCl_4$. $SiCl_4$, $TiCl_4$. $ZrCl_4$. Sie können auch als Gemische eingesetzt werden. Pro Mol Dicarbonsäure werden 1 bis 2 Mol Halogenid eingesetzt.

Die Umsetzung wird bei einer Temperatur von 60 bis 250°C, vorzugsweise 100 bis 220°C ausgeführt, gegebenenfalls bei erhöhten Druck bis zu 10 bar.

Die erfindungsgemäße Umsetzung kann durch folgende Reaktionsgleichungen beschrieben werden:

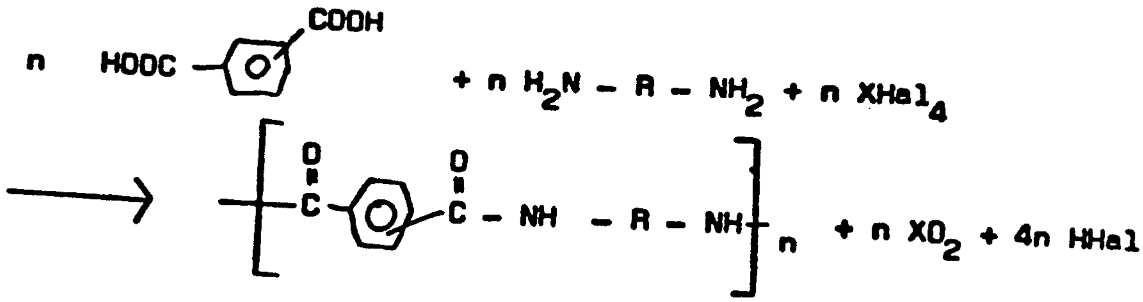

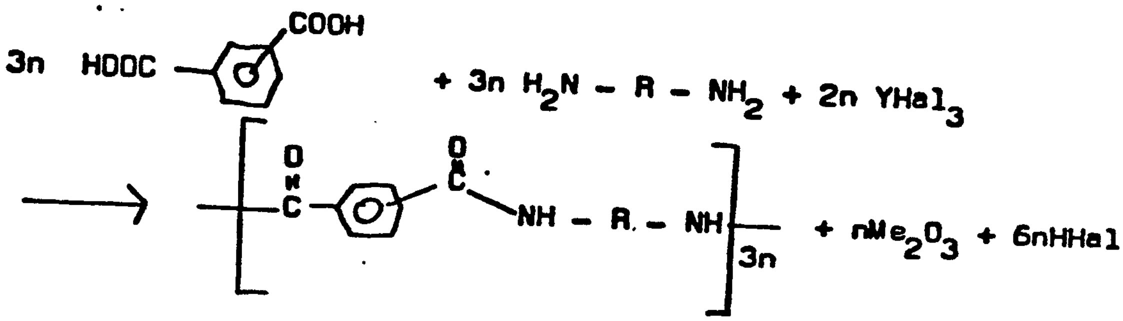

mit X = Element der 4. Hauptgruppe bzw. der 4. Nebengruppe
und Y = Element der 3. Hauptgruppe.

Die Regulierung des Molekulargewichts kann im wesentlichen über das jeweils eingesetzte Molverhältnis Dicarbonsäure zu Halogenid beeinflußt werden. Verwendet man als Kondensationsmittel ein Halogenid der 4. Haupt- bzw. Nebengruppe, so wird pro Mol Dicarbonsäure bzw. Diamin 0,5 bis 2 Mol, vorzugsweise 0,8 bis 1,4 Mol Metallhalogenid eingesetzt; bei Verwendung eines Halogenids der 3. Hauptgruppe wurde pro Mol Dicarbonsäure bzw. Diamin 0,2 bis 2 Mol, vorzugsweise 0,5 bis 1,5 Mol Metallhalogenid eingesetzt.

Die erzielten Molekulargewichte werden über die inhärenten Viskositäten ermittelt, welche bei 30°C an Lösungen von 0,5 g Polyamid in 100 ml konzentrierter Schwefelsäure gemessen wurden.

Die erfindungsgemäße Umsetzung kann in Gegenwart eines Lösungsmittels durchgeführt werden. Es können z.B. tertiäre aromatische stickstoffhaltige Heterocyclen wie Pyridin, Picolin, Lutidin, Chinolin, Isochinolin etc, andere übliche Lösungsmittel wie N-Methylpyrrolidon, Hexamethylphosphorsäuretriamid, N,N-Dimethylacetamid, Chlorbenzol, Decan u.s.w. verwendet werden. Mischungen von Lösungsmitteln können verwendet werden. Ein Zusatz von Lithium- oder Calciumsalzen kann sich günstig erweisen.

Die Wahl der Temperatur kann in Abhängigkeit vom Lösungsmittel erfolgen; bei Temperaturen über dem Siedepunkt des Lösungsmittels sollte unter Überdruck von 1 bis 10 bar umgesetzt werden.

Durchführung und Aufarbeitung der Umsetzung erfolgt nach üblichen Methoden.

Bei der Umsetzung werden die Polyamide im Gemisch mit den entsprechenden Elementoxiden der Elementhalogenide erhalten. Die Oxide können abgetrennt werden, z.B. wie im Falle des $TiO_2$ durch Lösen des Polymeren in N-Methylpyrrolidon/LiCl, Abfiltrieren des $TiO_2$ und Ausfällen des Polyamids oder, wie im Falle des $B_2O_3$ durch Lösen des Reaktionsgemisches in konzentrierter Schwefelsäure und Ausfällen mit Wasser.

Die nach dem erfindungsgemäßen Verfahren hergestellten Polyamide können in bekannter Weise zu Folien und Fasern verarbeitet werden.

Die nach dem Verfahren hergestellten Gemische aus Polyamiden und Oxiden können als Asbestersatz verwendet werden; sie sind zur Herstellung von Pulps geeignet, die zur Fertigung von Bremsbelägen verwendet werden können.

Die erfindungsgemäß erhaltenen Polyamide können in bekannter Weise z.B. zu Folien und Fasern verarbeitet werden.

Lösungen der erfindungsgemäß hergestellten Polyamide in geeigneten Lösungsmitteln (z.B. $H_2SO_4$, LiCl/Dimethylacetamid) zeigen u.a. ein anisotropes Verhalten. Diese Eigenschaft läßt sich z.B. bei der Herstellung von orientierten Fasern oder Folien vorteilhaft verwenden. Die Fasern können auf Grund der hohen Temperaturbeständigkeit und Stabilität bei hohen Temperaturen bis ca. 300° C und den Modulwerten (z.B. Reißfestigkeit) z.B. zu Verbundwerkstoffen verarbeitet werden, welche z.B. auf Einsatzgebieten, die z.B. hohen Verschleiß durch extreme Beanspruchung des Materials bewirken, verwendet werden können (z.B. Flugzeugbau). Sie haben dort bessere Eigenschaften als bekannte Fasern (z.B. Kevlar®-Fasern).

Die nach dem erfindungsgemäßen Verfahren hergestellten Polyamide können weiterhin z.B. zu Pulps verarbeitet werden. Diese Pulps bestehen aus einem Kurzfasermaterial mit hohen Festigkeitswerten. Die mit dem erfindungsgemäßen Verfahren hergestellten Polyamide können die Oxide aus den als Katalysator verwendeten Metallhalogeniden enthalten. In diesem Falle wird das Metalloxid bei der Ausfällung im Pulp fein verteilt und kann so als aktiver oder inerter Füllstoff dienen, der die Eigenschaften des Pulps günstig beeinflußt (z.B. Temperaturbeständigkeit, Reibungskoeffizient usw.).

So können z.B. $SiO_2$-haltige Polyamide (bei Verwendung von $SiCl_4$ als Katalysator bei der Herstellung der Polyamide) wieder aufgelöst werden, wobei das $SiO_2$ dann in der Lösung suspendiert wird. Aus dieser, suspendiertes $SiO_2$ enthaltenden Lösung können z.B. $SiO_2$-haltige Fasern und Folien hergestellt werden, aus denen z.B. Trägerplatten für z.B. bedruckte Schaltungen hergestellt werden. Die Fasern können vorzugsweise zu Vliesen, Förderbändern, Geweben, temperaturbeständigen Kleidungen, die außerdem als Isolierkleidung geeignet sind, verarbeitet werden. Die Isoliereigenschaften der Gewebe aus solchen Fasern machen sie besonders für Einsatzzwecke bei extremen Temperaturen geeignet (z.B. Feuerwehranzüge, Raumanzüge, Tiefkühlkleidung usw.).

## Beispiele

### Beispiel A

Kondensation von Terephthalsäure und 1.4-Phenylendiamin mit Titantetrachlorid

4,15 g Terephtalsäure, 2,7 g 1,4 -Phenylendiamin und 70 ml Pyridin werden in einem ausgeheizten 100 ml Dreihalskolben mit KPG-Rührer, Rückflußkühler und Septum eingefüllt. Unter Eiskühlung gibt man 3,3 ml $TiCl_4$ zu und erhitzt anschließend für 24 Stunden unter Rückfluß.

Zur Aufarbeitung wird das Reaktionsgemisch in 750 ml 2N HCl eingerührt und der Feststoff abgesaugt und gründlich mit $Na_2CO_3$-Lösung sowie mit Wasser, Methanol und Aceton gewaschen.

Nach dem Trocknen erhält man 6,28 g eines Gemischs aus Poly-(1,4-phenylenterephthalamid) und Titandioxid.

Dieses Gemisch gibt man in 300 ml N,N-Dimethylacetamid/12 g LiCl, erhitzt und filtriert anschließend das Titandioxid ab. Das Polymere wird in Aceton/Wasser ausgefällt, abgesaugt, gründlich mit heißem Wasser, Methanol und Aceton gewaschen und getrocknet.

### Beispiel B

Kondensation von Isophthalsäure und 1,3-Phenylendiamin mit Siliciumtetrachlorid/Bortrichlorid

4,15 g Isophthalsäure, 2,7 g 1,3-Phenylendiamin und 70 ml Pyridin werden in einem ausgeheizten 100 ml Dreihalskolben mit KPG-Rührer, Rückflußkühler, Tropftrichter und Septum eingefüllt. Unter Eiskühlung werden 2,9 ml $SiCl_4$ und 0,58 ml $BCl_3$ zugetropft, bzw. einkondensiert und 24 Stunden unter Rückfluß erhitzt.

Das Reaktionsgemisch wird in 750 ml 2N HCl eingerührt, der Feststoff abgesaugt und gründlich mit $Na_2CO_3$-Lösung sowie mit Wasser, Methanol und Aceton gewaschen.

Nach dem Trocknen erhält man 6,2 g eines Gemischs aus Poly-(1,3-phenylenterephthalamid), Siliciumdioxid und Borsäure.

Dieses Gemisch löst man in 300 ml $H_2SO_4$ und filtriert die vorhandenen unlöslichen Bestandteile ab.

Das Polymere wird in Wasser gefällt, mit Methanol und Aceton gewaschen und getrocknet.

Beispiel C

Kondensation von Terephthalsäure und 1,4-Phenylendiamin mit Siliciumtetrachlorid/Titantetrachlorid

4,15 g Terephthalsäure, 2,7 g 1,4-Phenylendiamin und 70 ml Pyridin werden in einem ausgeheizten 100 ml Dreihalskolben mit KPG-Rührer, Rückflußkühler und Septum eingefüllt. Unter Eiskühlung wird ein Gemisch aus 2,9 ml

$SiCl_4$ und 0,55 ml $TiCl_4$ zugetropft und 24 Stunden unter Rückfluß erhitzt. Das Reaktionsgemisch wird in 750 ml 2N HCl eingerührt, der Feststoff abgesaugt und mit einer $Na_2CO_3$-Lösung sowie mit Wasser, Methanol und Aceton gewaschen.

Nach dem Trocknen erhält man 6,42 g eines Gemischs aus Poly-(1,4-phenylenterephthalamid), Siliciumdioxid und Titandioxid. Die Metalloxide werden abgetrennt, indem das Produkt zunächst in 300 ml $H_2SO_4$ gelöst und das Polymere in Aceton gefällt wird. Das hierbei isolierte Polymere wird erneut in 300 ml N,N-Dimethylacetamid/12 g LiCl gelöst; die unlöslichen Bestandteile werden abfiltriert. Das Polymere wird in Aceton/Wasser ausgefällt, abgesaugt, mit heißem Wasser, Methanol und Aceton gewaschen und getrocknet.

Patentansprüche

1. Verfahren zur Herstellung aromatischer Polyamide mit wiederkehrenden Struktureinheiten der Formeln Ia und Ib

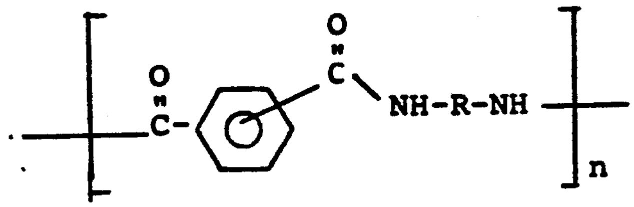

(Ia) ,

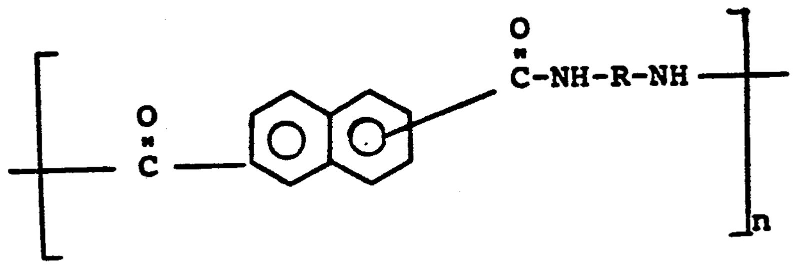

(Ib) ,

in welchen

R für

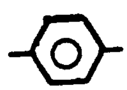 (p-Phenylen), 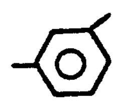 (m-Phenylen),

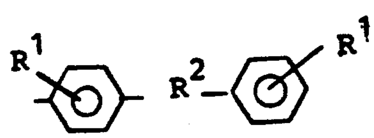 oder 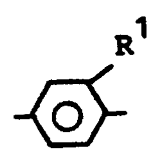 steht,

worin

$R^1$ für H, $C_1$-$C_8$-Alkyl steht,

$R^2$ für eine einfache Bindung, $-CH_2-$, -O-, $-SO_2-$ und -S- steht und

n für eine ganze Zahl von 2 bis 200, vorzugsweise 5 bis 100 steht,

durch Umsetzung von aromatischen Carbonsäuren mit Diaminen, dadurch gekennzeichnet, daß die Umsetzung in Gegenwart von Halogeniden von Elementen der 3. und 4. Hauptgruppe sowie der 4. Nebengruppe des Periodensystems durchgeführt wird.

2. Verfahren nach Anspruch 1, dadurch gekennzeichnet, daß als aromatische Dicarbonsäuren

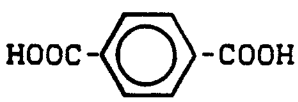 (Terephthalsäure) (IIa) ,

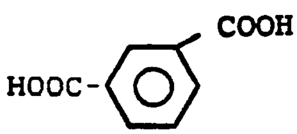 (Isophthalsäure) (IIb),

Naphthalindicarbonsäuren wie

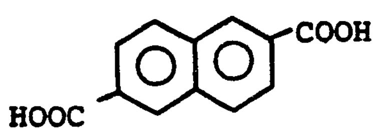

(Naphthalin-2,6-dicarbonsäure) (IIc)

und

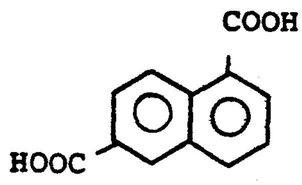

(Naphthalin-1,6-dicarbonsäure) (IId),

eingesetzt werden.

3. Verfahren nach Anspruch 1, dadurch gekennzeichnet, daß Amine der Formel (III)

$$H_2N\text{-}R\text{-}NH_2 \qquad (III),$$

in welcher

R die bei Formel (Ia und Ib) angegebene Bedeutung hat,

eingesetzt werden.

4. Gemische aus Polyamiden hergestellt nach Anspruch 1 und Oxiden von Elementen der 3. und 4. Hauptgruppe sowie 4. Nebengruppe des Periodensystems.